# FASCICULE DE BREVET EUROPEEN

(11) **EP 3 005 239 B1**
(45) Date de publication et mention de la délivrance du brevet: **09.08.2017**
(21) Numéro de dépôt: 14733253.0
(22) Date de dépôt: 04.06.2014
(51) Int. Cl.: G06K 19/06, G06F 13/00

(54) **SYSTEME DE COMMUNICATION GENERATEUR D'ELECTRICITE ET MUR SOLAIRE CORRESPONDANT**
ELEKTRIZITÄTSERZEUGENDES KOMMUNIKATIONSSYSTEM UND ZUGEHÖRIGE SOLARMAUER
ELECTRICITY GENERATING COMMUNICATION SYSTEM AND CORRESPONDING SOLAR WALL

(30) Priorité: 05.06.2013 FR 1355166
(43) Date de publication de la demande: 13.04.2016
(73) Titulaire: Ponka, 75013 Paris (FR)
(72) Inventeur: PHILIPPON, Brigitte, 75013 Paris (FR); KALT, Jean, 75013 Paris (FR)
(74) Mandataire: Benech, Frédéric
(86) Numéro de dépôt international: PCT/FR2014/051325
(87) Numéro de publication internationale: WO 2014/195635

(56) Documents cités:
- KR-A- 20120 064 200

## Description

La présente invention concerne un système de communication avec un utilisateur muni d'un appareil portable capteur d'images propre à être connecté au réseau Internet ainsi qu'un mur solaire communiquant mettant en oeuvre un tel système. KR 2012 0064200 divulgue un système de communication selon l'art antérieur. L'invention trouve une application particulièrement importante bien que non exclusive dans le domaine des murs communiquant par flashcode ou plus généralement par QR code.

Un QR code est un code mis en oeuvre dans un système dans lequel un utilisateur acquiert des données numériques à partir d'une image captée par un dispositif optique, comme par exemple la caméra CDD d'un téléphone mobile ou PDA (initiales anglosaxones de Personnal Digital Assistant). L'appareil portable étant connecté à un réseau, l'utilisateur accède ainsi de façon dirigée à Internet et est notamment automatiquement redirigé vers une page web.

Le flashcode (marque Française déposée) est un code barre matriciel à deux dimensions tel qu'un QR code conforme à la norme internationale ISO/CEI 18004:2006.

De tels murs sont notamment utilisables en bordure de voie de circulation piétonnière ou routière, de telle sorte qu'ils soient visibles par des usagers depuis une voie publique.

On connaît des murs communiquant affichant des informations modulables.

Ils présentent cependant des inconvénients. Ils sont en général de petites dimensions, coûtent cher et ne sont utilisable que de jour car souvent mal éclairés faute de l'existence d'une alimentation électrique à proximité.

Dans d'autres cas (panneaux déroulants éclairés), ils nécessitent au contraire une source en énergie électrique fiable et suffisante.

Quoiqu'il en soit la quantité d'informations délivrées est peu importante, est la même pour tous et nécessite en général une mise à jour régulière et coûteuse du fait de l'intervention de personnel pour changer les affiches.

Un utilisateur peut également avoir un intérêt à obtenir des informations, par exemple historiques, sur le lieu où il se trouve autrement difficiles à trouver et/ou trop longues pour être aisément présentées sur un panneau.

Il peut être de plus intéressant de lui permettre d'interagir avec son environnement malgré une absence de branchement électrique possible et de façon écologique.

La présente invention vise à fournir un système répondant mieux que ceux antérieurement connus aux exigences de la pratique, notamment en ce qu'elle propose un système de communication d'informations nombreuses, aisément modifiables, et disponibles à tout moment comme cela peut se faire grâce au réseau Internet, et ce quel que soit l'heure du jour et de la nuit, tout en étant productrice d'énergie et plus particulièrement en étant autonome en énergie. Elle est de plus insérable facilement dans des installations existantes, de manière simple et écologique.

Pour ce faire elle part de l'idée d'installer sur une surface verticale visible d'un utilisateur et de son PDA, des cellules photovoltaïques de couleurs sombres à qui elle confère une configuration au pattern (i.e. motif ou modèle) particulier selon un QR code déterminé, utilisable pour communiquer.

L'utilisation de cellules photovoltaïques va permettre de générer de l'électricité pendant la journée, et ce même si une partie de la surface est électriquement improductive, l'invention permettant donc de réaliser un mur communiquant électriquement autonome, présentant de plus un encombrement faible.

Ainsi un tel mur va pouvoir continuer à être communiquant même en présence de lumière faible, ou encore de nuit, et ce sans apport externe d'énergie.

Pour ce faire, l'invention propose essentiellement un système de communication avec un utilisateur muni d'un appareil portable capteur d'images propre à être connecté au réseau Internet, selon la revendication 1. Les moyens de récupération de l'énergie électrique permettent avantageusement un stockage pendant une durée déterminée suffisante.

Dans des modes de réalisation avantageux, on a par ailleurs et/ou de plus recours à l'une et/ou à l'autre des dispositions suivantes :
- le système comporte des moyens d'éclairage du mur solaire à partir de l'énergie électrique créée par lesdites cellules et stockée par le système, de sorte que l'appareil portable peut capter le pattern en l'absence de lumière externe ;
- les moyens d'éclairage comportent des diodes électroluminescentes dispersées derrière la paroi verticale ;
- le mur est formé de plusieurs panneaux jouxtés les uns aux autres par des bandes de jonction portées par une structure de support.

Cela permet une construction modulaire efficace et aisée à mettre en oeuvre.

Dans un mode alternatif de réalisation, un simple espacement des panneaux est prévu ;
- les cellules photovoltaïques formant le pattern sont de couleur sombre ou noire et le fond du pattern est formé d'un film de couleur claire ou blanche, associé et/ou confondu avec un film absorbant acoustique ;
- le film absorbant acoustique est parallèle à, situé à une distance déterminée de, et s'étendant sur une surface sensiblement égale à celle de, la paroi de verre, du côté des cellules photovoltaïques et délimitant avec ladite paroi de verre une lame d'air entre les deux formant caisson.

Le mur communiquant autorise ainsi également une réduction des nuisances sonores, par exemple lorsqu'il est installé en bordure de route et ce tout en étant d'un poids et d'un encombrement faible ;
- le système comporte de plus un dispositif de tubes verticaux disposés à distance du fond et/ou de la paroi verticale avec lesquels ils sont par exemple solidaire, formant des cavités à parois tubulaires, chaque tube étant muni d'au moins un trou sur sa paroi tubulaire pour former résonateur, les dimensions de la section transversale de ladite cavité et du trou étant agencés pour permettre l'absorption d'une ou plusieurs fréquences acoustiques ;
- le verre est structuré. Par structuré, on entend un verre coulé ou imprimé qui obtient sa forme et sa surface particulière grâce à un procédé de pression par rouleaux ;
- les rubans sont disposés verticalement et traversent les cellules photovoltaïques de dimensions comprises entre 20 cm X 20 cm et 15 cm X 15 cm ;
- le pattern constitue un QR code, par exemple un flashcode ;
- le système comporte de plus un chapeau absorbant antibruit situé sur la périphérie supérieure du mur ;
- les tubes sont cylindriques ou sensiblement cylindriques de diamètre compris entre 80 mm et 120mm le diamètre équivalent du trou étant compris entre 5 mm et 30 mm ;
- les tubes comportent plusieurs trous sur leurs parois latérales ;
- les tubes sont disposés sensiblement parallèlement et espacés régulièrement les uns des autres.

L'invention propose également un mur selon la revendication 11. Elle propose aussi un mur solaire communiquant comprenant une paroi verticale en verre d'épaisseur e comprise entre 3 mm et 1 cm, de largeur l comprise entre 50 cm et 2 m et de longueur L comprise entre 1 m et 4 m, muni sur une de ses surface de cellules photovoltaïques cristallines agencées selon un pattern déterminé, reliées entre elles par des rubans de connexion avec au moins un boîtier électrique de récupération de l'énergie électrique crée par lesdites cellules, ledit pattern étant agencé pour permettre la transmission d'informations à un utilisateur situé en vis à vis du mur muni d'un appareil portable capteur d'image, via ledit appareil connecté à Internet. Selon l'invention de la revendication 11 le pattern constitue un flashcode ou un QR code. De plus, l'objet de la revendication 11 comporte des moyens d'éclairage à partir dudit boîtier électrique. Avantageusement les cellules photovoltaïques formant le pattern sont de couleur sombre ou noire et le fond du pattern est formé d'un film de couleur claire ou blanche, absorbant acoustique.

L'invention sera mieux comprise à la lecture de la description qui suit de modes de réalisation donnés ci-après à titre d'exemples non limitatifs.

La description se réfère aux dessins qui l'accompagnent dans lesquels :
La figure 1 est une représentation schématique d'un système en interaction avec un utilisateur, selon un mode de réalisation de l'invention.
La figure 2 est une vue de face (partielle) d'un mur solaire communiquant selon le mode de réalisation de l'invention plus particulièrement décrit ici.
La figure 3 est une vue en coupe selon III-III du mur solaire de la figure 2, par exemple installé en bordure d'une voie de circulation.
La figure 4 est une vue arrière du dispositif de tubes verticaux anti-bruit appartenant à un mur solaire communiquant selon un mode de réalisation de l'invention.
La figure 5 est une vue en coupe selon V-V du mur solaire de la figure 4.

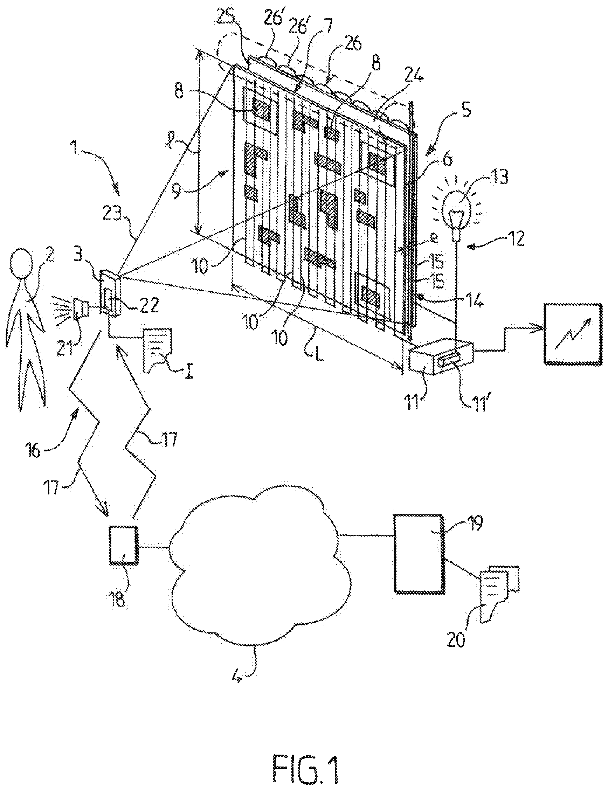

La figure 1 montre un système 1 de communication avec un utilisateur 2 muni d'un appareil portable 3, tel qu'un téléphone mobile, propre à être connecté au réseau Internet 4.

Le système comporte un mur solaire 5 communiquant comprenant une paroi verticale 6 en verre transparent par exemple carré d'épaisseur e = 3.5 mm, de largeur l = 1 m et de longueur L =1 m.

Le mur comprend sur sa face interne 7 des cellules photovoltaïques 8 cristallines par exemple monocristalline commercialisées par la société ISSOL notamment sous la référence CENIT 220-MODEL-140-6112, agencées selon un pattern déterminé 9 par exemple un flashcode. Les cellules sont reliées entre elles de façon connue en elle-même par des rubans 10 de connexion avec un boitier 11 électrique de récupération et/ou de stockage de l'énergie électrique créée par les cellules. Le système comprend des moyens 12 d'éclairage, par exemple un projecteur 13 ou des tubes 14 de LED 15 disposés le long du et/ou derrière le mur, par exemple pour diffuser la lumière sur une surface translucide (non représentée) située derrière les cellules photovoltaïques.

Le système 1 comprend également, via l'appareil portable 3, des moyens 16 de transmission d'informations I par ondes électromagnétiques 17.

Les moyens de transmission d'informations I sont reliés à Internet par un serveur 18 appartenant au réseau (serveur tête de réseau).

Le serveur 18 tête de réseau est lui-même connecté via Internet à un serveur ou ordinateur distant 19.

Le serveur distant 19, après analyse des données I reçues de l'appareil portable, répond en réémettant à son tour des trains de données numériques 20 en fonction du résultat de l'analyse. Les nouvelles données numériques sont alors acheminées en retour par le réseau jusqu'à l'appareil portable et restituées visuellement ou par le haut-parleur 21 du portable.

Les données reçues du serveur distant sont par exemple une adresse de site Internet, un message textuel, un commentaire audio, une commande informatique etc.

L'appareil portable 3 comporte quant à lui des moyens 22 de capture optique (cône 23) d'image, et des moyens comme en eux-mêmes de conversion de celle-ci en données numériques (capteur CCD).

L'appareil portable peut alors transmettre au serveur distant une combinaison des données d'images capturées avec, et par exemple, des données personnalisées relatives à l'appareil portable 3 (informations d'identification de l'utilisateur, d'un profil d'utilisateur prédéfini...).

Le mur solaire 5 comprend une plaque ou paroi verticale de verre 6. Le mur solaire 5 comprend également un fond clair de mêmes dimensions que la plaque verticale 6 et/ou un film 24 également de même dimension que la plaque 6, par exemple également de couleur claire et/ou transparent. Le film est situé à une distance e (par exemple 1 cm) de la paroi de verre 6.

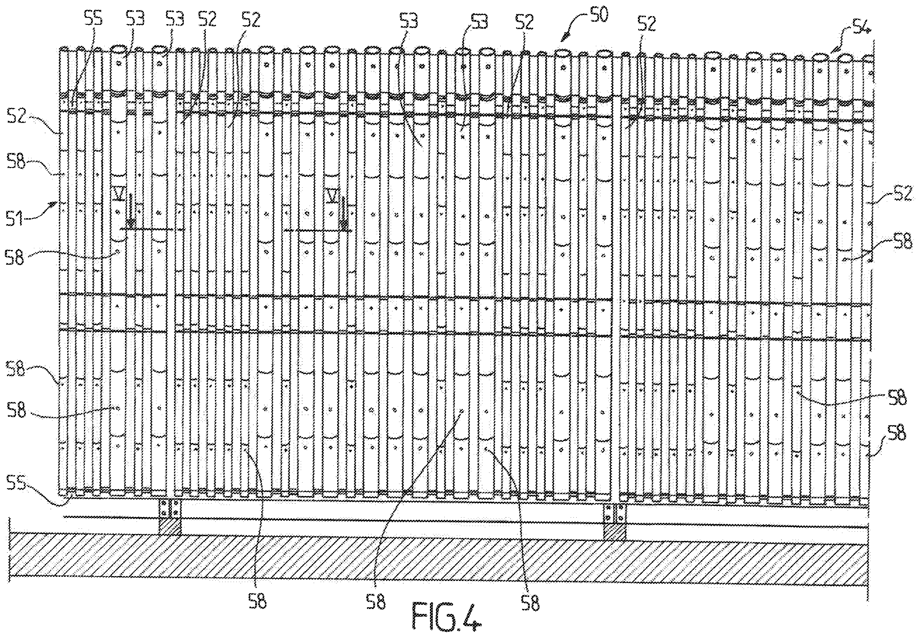

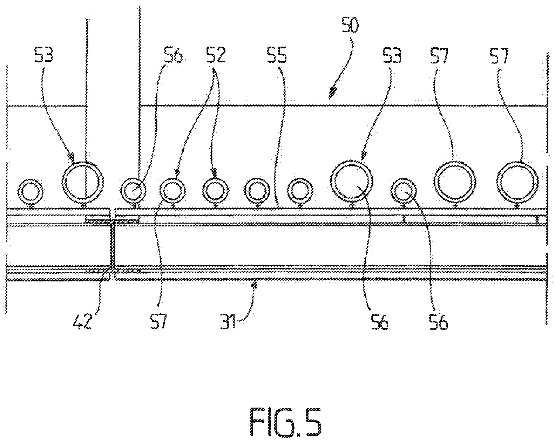

Il délimite avec la paroi de verre en vis à vis une lame d'air 25 formant un caisson. Il est lui-même par exemple associé à un dispositif 26 formé de tubes 26'disposés sur l'arrière et tout au long du fond clair, comme cela sera décrit plus précisément ci-après en référence aux figures 4 et 5.

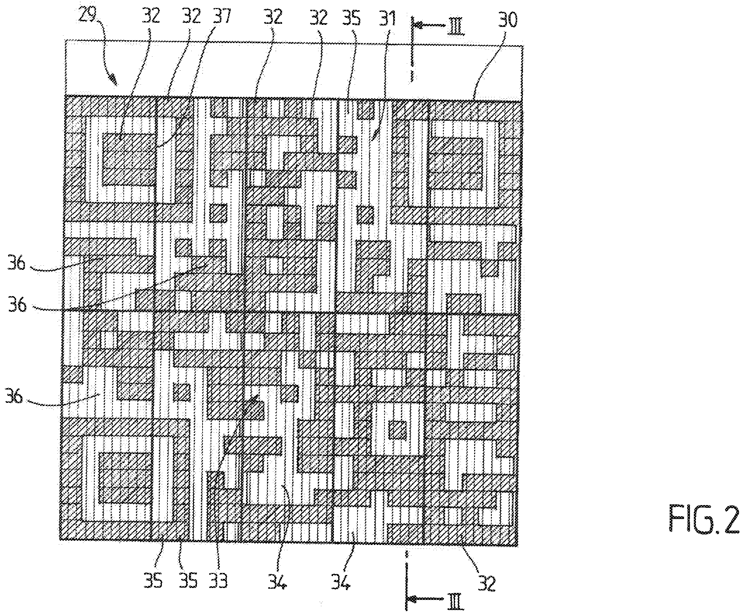

La figure 2 montre une vue de face du pattern 29 d'un mur solaire 30 selon le mode de réalisation plus particulièrement décrit ici.

Le mur 30 vertical est de forme rectangulaire et présente une face avant 31 et une face arrière. La face avant 31 est formée par une paroi verticale en verre globalement en vis-à-vis de l'utilisateur, par exemple constituée de deux plaques de verre collées l'une sur l'autre de façon connue.

Le verre possède des propriétés antireflets, celles-ci étant obtenues par traitement chimique, physique, adjonction de film ou toute autre méthode à la portée de l'homme du métier.

Avantageusement le verre est un verre structuré, c'est-à-dire qu'il est le résultat d'un procédé le comprimant à chaud à l'aide de rouleaux. Le verre est transparent, les cellules photovoltaïques étant par exemple prises en sandwich avec une deuxième paroi de verre (non représentée) par exemple teinte en blanc et/ou translucide. Le verre structuré est par exemple un verre vendu par la société française Saint-Gobain, sous la marque ALBARINO P.

La paroi est munie sur sa face opposée de cellules photovoltaïques 32 cristallines, par exemple identiques, de forme carré et de dimensions comprises entre 20 cm X 20 cm et 15 cm X 15 cm disposées de façon alternée 33 en fonction du pattern 29.

Les cellules 32 sont, dans ce mode de réalisation, collées directement sur la paroi en verre.

Dans un autre mode de réalisation les cellules photovoltaïques sont par exemple fixées sur un film ou une autre paroi de verre lui-même fixé au verre.

La fixation s'opère alors par exemple par collage et/ou par pression exercé par un laminoir.

Le fond 34 du pattern est formé d'un film de couleur différente de celle des cellules, avantageusement blanche ou claire pour optimiser le contraste entre les cellules de couleur sombre et le fond.

Celui-ci s'étend sur une surface sensiblement égale à, celle de la paroi de verre.

Il est par exemple monté de façon parallèle à la paroi de verre. L'ensemble vitre structuré plus cellules plus film blanc est alors laminé.

Mais avantageusement ce film et/ou un deuxième film est prévu à distance, délimitant avec ladite paroi de verre une lame d'air entre les deux, formant caisson.

Le film formant le fond 34 est par exemple un film en fluoropolymère tel que le polyfluorure de vinyle connu sous l'appellation commerciale TEDLAR de la société DUPONT. Il peut être également formé en matériau absorbant acoustique, comme par exemple en matériau vendu par la société SONOGAMMA sous la marque FILVA-T.

Les cellules photovoltaïques cristallines agencées à la surface du verre ou du fond selon le pattern déterminé 9, sont reliées entre-elles par des rubans 35 de façon connue en elle-même.

Les rubans sont disposés verticalement et traversent les cellules photovoltaïques. Chaque ruban de jonction électrique permet ainsi une connexion individuelle ou collective de l'ensemble au moyen d'une partie en excroissance (non représentée sur la figure 2) par rapport au bord inférieur du mur, formant patte de connexion.

Comme on l'a vu en référence à la figure 1, les cellules sont ensuite reliées à un boîtier 11 de stockage et d'alimentation électrique permettant l'éclairage du mur et pouvant éventuellement être utilisées à d'autres fins. Le boîtier comporte des moyens 11' de calcul et/ou de régulations agencées pour placer automatiquement le système dans un mode de fonctionnement qui charge les moyens de stockage d'énergie avec l'électricité créée par les cellules et/ou qui au contraire actionne les moyens d'éclairage.

Les moyens d'éclairage peuvent ainsi consommer l'énergie électrique stockée dans les moyens de stockage ou celle générée directement et sensiblement instantanément par le mur solaire.

Dans le mode de réalisation décrit ici le mur solaire est divisé en panneaux 36 à savoir deux rangs superposés de cinq panneaux.

Les panneaux sont jouxtés les uns aux autres par des bandes de jonction 37 par exemple en matière plastique.

Ils sont de forme rectangulaire et leurs dimensions en longueur et largeur sont des multiples des dimensions d'une cellule photovoltaïque.

Par exemple, pour des cellules photovoltaïques de 15cm par 15cm, un panneau sera sensiblement de 180cm de long (i.e. 12*15cm) et de 75cm de large (i.e. 5*15).

Dans ce mode de réalisation, un panneau présente donc, sur sa surface, un maillage de cases comprenant douze cases de long et cinq cases de large.

Dans chaque case du maillage sont disposées des cellules photovoltaïques ou non.

Les cellules voltaïques étant de couleur sombre ou noire la présence ou l'absence de cellules photovoltaïques forme par contraste une figure, c'est-à-dire un pattern.

En associant chaque case du maillage à un pixel, ou une série de pixels, le pattern global ainsi formé par la juxtaposition de panneaux constitue alors une figure représentant un flashcode ou un QR code.

De cette manière la disposition prédéterminée des cellules sur un fond de couleurs différent va représenter un QR code, ou tout autre code barre matriciel.

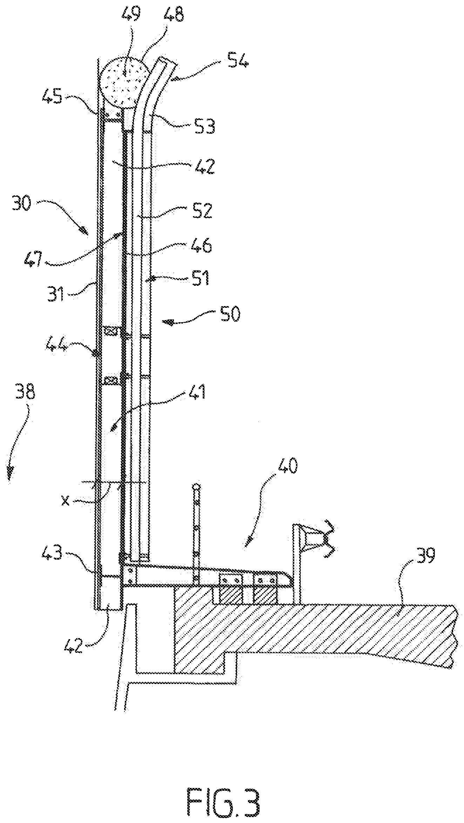

La figure 3 est une vue en coupe selon III-III du mur solaire 30 de la figure 2, par exemple installé en bordure d'une voie de circulation routière (du côté 38) et fixé à un support 39 par des moyens d'accrochage 40, la face avant 31 étant en regard de la voie de circulation.

Plus précisément le mur 30 comporte un élément de soutien 41, comme par exemple deux poutres verticales ou poteau du type IPN 42, fixées sur les moyens 40,

L'élément de support 41 comprend trois traverses 43, 44, 45 à savoir une traverse basse en H de fixation à l'extrémité des moyens 40, une goulotte centrale 44, et une traverse haute 45 en H, les traverses étant fixées de part et d'autre aux poutres verticales 42 solidaires des moyens 40.

Selon le mode de réalisation de l'invention plus particulièrement décrit le mur 30 comprend la face avant 31 muni du pattern tel que décrit en référence à la figure 2, fixée sur les traverses de façon connue en elle-même et une paroi ou plaque arrière 46.

La plaque arrière 46 est de forme sensiblement identique à celle de la face avant 31, de même dimension et est fixée sur l'élément de support 41 de façon similaire.

La plaque arrière 46 est par exemple en métal léger, par exemple en aluminium sur lequel est fixé le film clair antibruit 24 par exemple par collage.

Dans un autre mode de réalisation la plaque arrière 46 est formée par deux réseaux transparents par exemple en aluminium formant chacun un maillage métallique. Les deux réseaux enserrent entre eux un film transparent antibruit, notamment en ETFE (poly(éthylène-co-tétrafluoroéthyléne). L'ensemble des deux réseaux et du film forme ainsi par exemple un film connu sous la dénomination FILVA-T de la société SONOGAMMA.

L'espace x entre la face avant 31 et la plaque arrière est par exemple compris entre 100 mm et 200 mm par exemple supérieur à 110 mm (cet espace x n'est pas représenté à l'échelle sur la figure).

La traverse 44 est située à mi-hauteur à cheval et entre les deux rangs superposée de panneaux. Elle se présente sous forme de deux goulottes en « U » symétriquement disposées.

Les goulottes forment un guide de passage des câbles (non représentés) reliant les cellules photovoltaïques et permettent leur passage horizontal le long des panneaux.

Le support 41 comprend en partie haute un absorbeur de bruit, par exemple constitué d'un cylindre horizontal 48 complet ou tronqué, rempli d'un matériau 49 isolant phonique.

Le canal forme ainsi un chapeau sensiblement cylindrique absorbant situé sur la périphérie supérieure du mur.

Le mur 30 est par ailleurs muni d'un dispositif antibruit 50 qui va maintenant être décrit en référence aux figures 3,4 et 5.

Le dispositif 50 comporte un ensemble 51 de tubes verticaux 52, 53, par exemple des ensembles de cinq tubes 52 de petit diamètre (80 mm) séparés par des tubes 53 de plus gros diamètre (120 mm) et/ou autres dispositions comme par exemple représentés sur la figure 5.

Ils sont disposés sensiblement parallèlement entre eux et à la paroi, et présente une extrémité 54 en forme de crosse inclinée.

Les tubes 52, 53 sont par exemple espacés régulièrement les uns des autres à une distance comprise entre 10 mm et 10 cm, par exemple 8cm. Ils sont solidaires entre eux par le biais de deux tiges 55 de fixation horizontale fixée en haut et/ou en bas des tubes.

L'ensemble 51 est disposé à une distance déterminée de la plaque 46, par exemple 20 mm.

Chaque tube 52 forme une cavité 56 (voir figure 5) à parois tubulaires 57, en étant muni d'au moins un trou 58 sur leurs parois pour former un résonateur acoustique (voir figure 4).

Avantageusement ils sont chacun percés de plusieurs trous sur leurs parois latérales. Dans ce mode de réalisation les trous ne sont, par exemple, pas en vis-à-vis à une hauteur identique.

Pour une longueur et une largeur de tubes déterminés, les trous sont régulièrement espacés et dimensionnés pour permettre l'absorption des fréquences plus particulièrement gênantes dans le contexte d'utilisation de l'invention.

Le dimensionnement est notamment corrélé au volume intérieur du tube, à l'épaisseur de sa paroi et au diamètre de percement du tube de façon connue en elle-même avec ces tubes dont le fonctionnement est comparable aux tubes résonateurs de HELMHOLTZ.

Plus précisément la figure 5 montre en coupe, une partie du dispositif de la figure 4.

Les tubes 52, 53 sont métalliques et/ou en matière plastique.

Dans un autre mode de réalisation les tubes sont des tiges végétales naturelles par exemple appartenant à la famille des bambusoideae telles que le bambou.

Ils sont cylindriques ou sensiblement cylindriques, de diamètre compris entre 3 cm et 20 cm, par exemple entre 5 cm et 15 cm. Le diamètre équivalent des trous est quant à lui compris entre 3 mm et 30 mm par exemple de 5 mm et 20 mm, les dimensions de la section transversale de la cavité interne du tube et celles des trous étant agencées pour permettre l'absorption d'une ou plusieurs fréquences acoustiques de façon connue en elle-même.

Il va maintenant être décrit en référence à la figure 1 une utilisation d'un dispositif 1 selon l'invention.

Un utilisateur 2 se présente de nuit face à la paroi en verre 6 muni des cellules photovoltaïques 8.

Les moyens 11' de régulation du système du fait de la nuit, vont enclencher le fonctionnement des moyens 13 d'éclairage par l'énergie électrique stockée dans les moyens de stockage durant la journée précédente.

Ceux-ci rendent alors visible à l'utilisateur la face avant du mur solaire et le pattern 9 constitué par la disposition des panneaux et des cellules photovoltaïques et formant un flashcode.

Avec un appareil portable 3, du type téléphone mobile, l'utilisateur prend alors une photo du mur (et de son flashcode), ce qui actionne l'application informatique permettant l'accès au serveur distant de façon connue en elle-même.

Des données propres au profil de l'utilisateur, indiquant par exemple son goût pour l'histoire, sont également introduites dans le message, correspondant aux informations I, qui est alors émis.

Le serveur distant 19 dont l'adresse fait partie des informations contenues dans le QR code, reçoit le message et choisit parmi des sites Internet présélectionnés en fonction des données propres dU profil, de renvoyer un nouveau message à l'utilisateur, indiquant par exemple l'existence d'un château médiéval à visiter dans le secteur géographique proche mais invisible de nuit.

L'utilisateur dispose ainsi de données contextuelles.

Le bruit provenant de la route est quant à lui diminué du fait du film 46 absorbant acoustique et du dispositif anti-bruit 50.

Comme il va de soi et comme il résulte également de ce qui précède, la présente invention n'est pas limitée aux modes de réalisation plus particulièrement décrits. Elle en embrasse au contraire toutes les variantes et notamment celles où l'appareil portable est différent (tablette, etc...), ou celles où les cellules sont différentes, par exemple d'une autre forme que carré ou d'autre dimensions par exemple 5cm*5cm, ou celles où le flash code est délimité par un pattern en négatif, c'est à dire dans lequel les cellules photovoltaïques correspondent chacune à un pixel claire du flash code et les parties claires du fond correspondent à un pixel sombre, la corrélation avec l'adresse Internet étant opérée par l'appareil portable par exemple, ou celles où les tubes sont horizontaux.

## Revendications

1. Système (1) de communication avec un utilisateur (2) muni d'un appareil portable (3) capteur d'images propre à être connecté au réseau Internet (4), **caractérisé en ce qu'**il comporte un mur solaire (5,30) communiquant comprenant une paroi verticale (6,31)en verre d'épaisseur e comprise entre 3 mm et 1 cm, de largeur l comprise entre 50 cm et 2 m et de longueur L comprise entre 1 m et 4 m, muni sur sa face interne de cellules photovoltaïques (8,32) cristallines agencées selon un pattern (9,33) déterminé, reliées entre elles par des rubans (10) de connexion avec au moins un boîtier (11) électrique de récupération de l'énergie électrique crée par lesdites cellules, ledit système (1) comprenant ou étant connectable à des moyens (16) de transmission d'informations à partir du réseau Internet à l'utilisateur (2) situé en vis à vis du mur (5,30) via son appareil portable, en fonction du pattern (9,33) déterminé des cellules photovoltaïques (8,33) capté optiquement par ledit appareil portable.

2. Système selon la revendication 1, **caractérisé en ce qu'**il comporte des moyens (12) d'éclairage du mur solaire à partir de l'énergie électrique créée par lesdites cellules et stockée par le système, de sorte que l'appareil portable peut capter le pattern en l'absence de lumière externe.

3. Système selon l'une quelconque des revendications précédentes, **caractérisé en ce que** le mur est formé de plusieurs panneaux (36) jouxtés les uns aux autres par des bandes (37) de jonction portées par une structure de support.

4. Système selon l'une quelconque des revendications précédentes, **caractérisé en ce que** les cellules photovoltaïques (8,32) formant le pattern (9,33) sont de couleur sombre ou noire et **en ce que** le fond du pattern est formé d'un film (24,34) de couleur claire ou blanche, associé et/ou confondu avec un film (34) absorbant acoustique.

5. Système selon la revendication 4, **caractérisé en ce que** le film absorbant (34) acoustique est parallèle à, situé à une distance déterminée (34), et s'étendant sur une surface sensiblement égale à celle de la paroi (6,31) de verre, du côté des cellules photovoltaïques (8,32) et délimitant avec ladite paroi de verre une lame d'air (25) entre les deux formant caisson.

6. Système selon l'une quelconque des revendications précédentes, **caractérisé en ce qu'**il comporte de plus un dispositif (26,50) de tubes verticaux (26 ;52,53) disposés à distance du fond (46) et/ou de la paroi verticale (31,46), formant des cavités (56) à parois tubulaires, chaque tube étant muni d'au moins un trou (58) sur sa paroi tubulaire pour former résonateur, les dimensions de la section transversale de ladite cavité et du trou étant agencés pour permettre l'absorption d'une ou plusieurs fréquences acoustiques.

7. Système selon l'une quelconque des revendications précédentes, **caractérisé en ce que** le verre est structuré.

8. Système selon l'une quelconque des revendications précédentes, **caractérisée en ce que** les rubans (10) sont disposés verticalement et traversent les cellules photovoltaïques de dimensions comprises entre 20 cm X 20 cm et 15 cm X 15 cm.

9. Système selon l'une quelconque des revendications précédentes, **caractérisé en ce que** le pattern (9,33) constitue un flashcode ou un QR code.

10. Système selon l'une quelconque des revendications précédentes, **caractérisé en ce qu'**il comporte de plus un chapeau (48) absorbant antibruit situé sur la périphérie supérieure du mur.

11. Mur solaire (5,30) communiquant comprenant une paroi verticale (6,31) en verre d'épaisseur e comprise entre 3 mm et 1 cm, de largeur l comprise entre 50 cm et 2 m et de longueur L comprise entre 1 m et 4 m, muni sur sa face interne de cellules photovoltaïques (8,32) cristallines agencées selon un pattern déterminé, reliées entre elles par des rubans (10) de connexion avec au moins un boîtier (11) électrique de récupération de l'énergie électrique crée par les cellules, ledit pattern (9,33) étant un flashcode ou un QR code, et ledit mur comportant des moyens (12) d'éclairage à partir du dit boîtier électrique.

## Patentansprüche

1. Kommunikationssystem (1) mit einem Teilnehmer (2) mit einem Bilder aufnehmenden Mobilgerät (3), das geeignet ist, mit dem Internet (4) verbunden zu werden,
**dadurch gekennzeichnet,**
**dass** es eine kommunizierende Solarmauer (5, 30) mit einer senkrechten Glaswand (6, 31) mit einer Dicke e zwischen 3 mm und 1 cm, einer Breite l zwischen 50 cm und 2 m und einer Länge L zwischen 1 m und 4 m mit kristallinen Solarzellen (8, 32) auf der Innenseite, welche gemäß einem bestimmten Muster (9, 33) angeordnet sind, miteinander über Streifen (10) zur Verbindung mit mindestens einem Schaltkasten (11) zum Abgreifen der von den Zellen erzeugten elektrischen Energie verbunden sind, wobei das System (1) Mittel (16) umfasst oder mit Mitteln (16) verbindbar ist, um Informationen aus dem Internet an den Teilnehmer (2), der sich gegenüber der Mauer (5, 30) befindet, über sein Mobilgerät in Abhängigkeit vom bestimmten Muster (9, 33) der Solarzellen (8, 33) zu übertragen, das optisch vom Mobilgerät erfasst wird.

2. System nach Anspruch 1,
**dadurch gekennzeichnet,**
**dass** es Mittel (12) umfasst, um die Solarmauer mit der elektrischen Energie zu beleuchten, die von den Zellen erzeugt und vom System gespeichert wird, so dass das Mobilgerät das Muster in Abwesenheit von externem Licht erfassen kann.

3. System nach einem beliebigen der vorhergehenden Ansprüche,
**dadurch gekennzeichnet,**
**dass** die Mauer durch mehrere Platten (36) gebildet ist, die über Verbindungsstreifen (37) aneinander angrenzen, welche von einer Trägerstruktur getragen werden.

4. System nach einem beliebigen der vorhergehenden Ansprüche,
**dadurch gekennzeichnet,**
**dass** die das Muster (9, 33) bildenden Solarzellen (8, 32) dunkel oder schwarz sind und
**dass** der Musterhintergrund durch einen hellen oder weißen Film (24, 34) gebildet ist, der einem akustischen Absorptionsfilm (34) zugeordnet ist und/oder damit übereinstimmt.

5. System nach Anspruch 4,
**dadurch gekennzeichnet,**
**dass** der akustische Absorptionsfilm (34) auf der Seite der Solarzellen (8, 32) parallel zu einer Fläche ist, in einem bestimmten Abstand (34) zu einer Fläche angeordnet ist und sich über eine Fläche erstreckt, die im Wesentlichen derjenigen der Glaswand (6, 31) entspricht, und mit der Glaswand einen Luftspalt (25) zwischen den beiden unter Bildung einer Kammer abgrenzt.

6. Systeme nach einem beliebigen der vorhergehenden Ansprüche,
**dadurch gekennzeichnet,**
**dass** es zudem eine Anordung (26, 50) aus vertikalen Rohren (26; 52, 53) aufweist, die vom Boden (46) und/oder von der vertikalen Wand (31, 46) beabstandet sind, wobei Hohlräume (56) mit rohrförmigen Wänden gebildet werden, wobei jedes Rohr mit mindestens einem Loch (58) auf seiner rohrförmigen Wand versehen ist, um einen Resonator zu bilden, wobei die Abmessungen des Querschnitts des Hohlraums und des Lochs so angeordnet sind, dass die Absorption einer oder mehrerer akustischer Frequenzen ermöglicht wird.

7. System nach einem beliebigen der vorhergehenden Ansprüche,
**dadurch gekennzeichnet,**
**dass** das Glas strukturiert ist.

8. System nach einem beliebigen der vorhergehenden Ansprüche,
**dadurch gekennzeichnet,**
**dass** die Streifen (10) vertikal angeordnet sind und die Solarzellen mit Abmessungen zwischen 20 cm X 20 cm und 15 cm X 15 cm durchqueren.

9. System nach einem beliebigen der vorhergehenden Ansprüche,
**dadurch gekennzeichnet,**
**dass** das Muster (9, 33) einen Flashcode der QR-Code bildet.

10. System nach einem beliebigen der vorhergehenden Ansprüche,
**dadurch gekennzeichnet,**
**dass** es ferner einen absorbierenden Lärmschutzaufsatz (48) aufweist, der auf dem oberen Umfang der Mauer angeordnet ist.

11. Kommunizierende Solarmauer (5, 30) mit einer senkrechten Glaswand (6, 31) mit einer Dicke e zwischen 3 mm und 1 cm, einer Breite l zwischen 50 cm und 2 m und einer Länge L zwischen 1 m und 4 m mit kristallinen Solarzellen (8, 32) auf der Innenseite, welche gemäß einem bestimmten Muster (9, 33) angeordnet sind, miteinander über Streifen (10) zur Verbindung mit mindestens einem Schaltkasten (11) zum Abgreifen der von den Zellen erzeugten elektrischen Energie verbunden sind, wobei das Muster (9, 33) ein Flashcode oder ein QR-Code ist und wobei die Mauer Mittel (12) zum Beleuchten ausgehend vom Schaltkasten aufweist.

## Claims

1. System (1) for communication with a user (2) provided with a portable image capturing apparatus (3) suitable to be connected to the Internet network (4), **characterised in that** it includes a communicating solar wall (5, 30) comprising a vertical wall (6, 31) made of glass of thickness e between 3 mm and 1 cm, of width l between 50 cm and 2 m and of length L between 1 m and 4 m, provided on its inner face with crystalline photovoltaic cells (8, 32) arranged in a determined pattern (9, 33), interconnected by connection ribbons (10) with at least one electrical box (11) for recovery of the electrical energy created by said cells, said system (1) comprising or being connectable to means (16) for transmission of information from the Internet network to the user (2) situated facing the wall (5, 30) via his portable apparatus, as a function of the determined pattern (9, 33) of the photovoltaic cells (8, 33) optically captured by said portable apparatus.

2. System according to claim 1, **characterised in that** it includes means (12) for lighting the solar wall from the electrical energy created by said cells and stored by the system, so that the portable apparatus can capture the pattern in the absence of external light.

3. System according to any one of the preceding claims, **characterised in that** the wall is formed of a plurality of panels (36) kept adjacent to each other by bonding strips (37) carried by a support structure.

4. System according to any one of the preceding claims, **characterised in that** the photovoltaic cells (8, 32) forming the pattern (9, 33) are of dark colour or black and **in that** the background of the pattern is formed of a film (24, 34) of light colour or white, associated and/or combined with an acoustic absorbing film (34).

5. System according to claim 4, **characterised in that** the acoustic absorbing film (34) is parallel with, situated at a determined distance (34), and extending over an area substantially equal to that of the glass wall (6, 31), on side of the photovoltaic cells (8, 32) and defining with said glass wall an air gap (25) between the two forming a box.

6. System according to any one of the preceding claims, **characterised in that** it includes in addition a device (26, 50) of vertical tubes (26; 52, 53) arranged at a distance from the background (46) and/or from the vertical wall (31, 46), forming cavities (56) with tubular walls, each tube being provided with at least one hole (58) in its tubular wall to form a resonator, the dimensions of the cross-section of said cavity and of the hole being arranged to allow the absorption of one or more acoustic frequencies.

7. System according to any one of the preceding claims, **characterised in that** the glass is textured.

8. System according to any one of the preceding claims, **characterised in that** the ribbons (10) are arranged vertically and traverse the photovoltaic cells of dimensions of 20 cm X 20 cm and 15 cm X 15 cm.

9. System according to any one of the preceding claims, **characterised in that** the pattern (9, 33) forms a flashcode or a QR code.

10. System according to any one of the preceding claims, **characterised in that** it includes in addition a noise-preventing absorbent cap (48) situated on the upper periphery of the wall.

11. Communicating solar wall (5, 30) comprising a vertical wall (6, 31) made of glass of thickness e between 3 mm and 1 cm, of width l between 50 cm and 2 m and of length L between 1 m and 4 m, provided on its inside face with crystalline photovoltaic cells (8, 32) arranged in a determined pattern, interconnected by connection ribbons (10) with at least one electrical box (11) for recovery of the electrical energy created by the cells, said pattern (9, 33) being a flashcode or a QR code, and said wall including means (12), for lighting from said electrical box.
